# EUROPEAN PATENT SPECIFICATION

(11) **EP 3 871 913 B1**
(45) Date of publication and mention of the grant of the patent: **06.09.2023**
(21) Application number: 19876351.8
(22) Date of filing: 21.10.2019
(51) Int. Cl.: B60K 1/04

(54) **MOBILE OBJECT**
MOBILES OBJEKT
OBJET MOBILE

(30) Priority: 22.10.2018 JP 2018198370
(43) Date of publication of application: 01.09.2021
(73) Proprietor: HONDA MOTOR CO., LTD., Minato-ku Tokyo 107-8556 (JP)
(72) Inventor: AZUMA, Hidenori, Wako-shi, Saitama 351-0193 (JP)
(74) Representative: Kiwit, Benedikt
(86) International application number: PCT/JP2019/041286
(87) International publication number: WO 2020/085293

(56) References cited:
- DE-A1-102015 200 388
- JP-A- H09 290 650
- JP-A- 2001 045 606
- JP-A- 2008 080 841
- JP-A- 2009 132 169
- JP-A- 2014 179 287
- JP-A- 2014 208 518
- JP-A- 2019 131 166
- US-A1- 2017 106 733

## Description

### TECHNICAL FIELD

The present disclosure relates to a mobile body provided with a housing portion configured to store articles in a removable manner, and particularly relates to a mobile body that is suitable as an electric vehicle fitted with a battery pack mounting structure allowing a battery pack to be mounted and dismounted.

### BACKGROUND ART

Known electric vehicles allow a portable battery pack that can be carried by a user to be detachably mounted thereon (see JP H10 - 203 459 A, JP 2017 - 137 002 A, and WO 2017 / 022 394 A, for example).

In order to detachably accommodates a sub-battery pack, the battery housing portion of the electric vehicle disclosed in WO 2017 / 022 394 A includes a casing tiltably supported by a vehicle frame, a lid member, and a guide member provided on the lid member. When the lid member is in the upright posture to close the casing, the casing is maintained in a horizontal posture with the open end thereof on the side of the lid member facing rearward. When the lid member is in the horizontal posture to open the casing, the casing is tilted with the open end thereof on the side of the lid member raised upward, and the guide member provides a sliding surface continuous with a tilted sliding surface of the casing. Thereby, even when the storage position of the battery pack is some distance ahead of the rear end of the vehicle, the user is enabled to slide the battery pack into and out of the storage position with ease.

US 2017 / 106 733 A1 discloses an electric vehicle provided with sub-battery storage cases each configured to store sub-battery in a removable manner, wherein the sub-battery storage cases are located on the rear side of the vehicle in a fore and aft direction with respect to a central point of the vehicle. However, the sub-battery storage cases are fixed to the vehicle.

DE 10 2015 200 388 A1 discloses a vehicle with a battery changing device which comprises a receiving part, a battery module, and a closure element. This document also discloses the battery changing device with a mechanism, wherein the receiving part is positioned movably between an operation position and a changing position, the closure element is positioned movably between the closing position and the open position, the mechanism comprises a cylinder that is variable in length, which with its one end is movably connected to the closure element and with its other end is movably connected to a rotation element. The receiving part is movable along with a guide.

JP 2001 - 045 606 A discloses an electric vehicle, wherein the electric vehicle includes a plurality of batteries mounted in the luggage space of the rear portion of the vehicle body, and a support base on which each of the batteries is mounted is provided movably provided along the guide grooves which are formed on each pair of side wall portions. The support base can slide along the guide grooves.

JP 2008 - 080 841 A discloses an electric vehicle provided with a rechargeable battery storage chamber configured to store a battery pack provided at the rear of the vehicle. A storage cover constituting the rechargeable battery storage chamber is rotatably attached to a frame of the vehicle. The storage cover is located on the rear side of the vehicle.

JP 2014 - 179 287 A discloses an electric wheelchair provided with a holder and a battery, the battery is inserted into and mounted on the holder, wherein the holder is fixed to the back surface of the backrest.

JP 2019 - 131 166 A discloses an electric-powered two-wheeled vehicle provided with a battery case in which a battery is removably accommodated, wherein the battery case is rotatably provided centered on a support shaft.

JP 2009 - 132 169 A indicates that, with respect to a vehicle, a bottom part of the spare tire pan formed in a rear floor pan located behind a rear seat is lower than a lowermost part of the rear seat.

JP 2014 - 208 518 A indicates that, with respect to a vehicle, a space for arranging an IPU in a vehicle is provided behind a rear seat, and the IPU is arranged such that a portion of the IPU overlaps a seat back of the rear seat in the vehicle front-rear direction. The IPU is fixed to the rear floor of the vehicle.

JP H09 - 290 650 A indicates that, with respect to a vehicle, a space for arranging a fuel cylinder in a vehicle is provided behind a rear seat and the fuel cylinder is arranged such that a portion of the fuel cylinder overlaps a seat back of the rear seat in the vehicle front-rear direction. The fuel cylinder is fixed to a vehicle body.

### SUMMARY OF THE INVENTION

### TASK TO BE ACCOMPLISHED BY THE INVENTION

However, in the conventional battery pack mounting structure, in plan view, the position of the battery pack at the time of mounting and dismounting the battery pack is the same or substantially the same as the position of the battery pack during use. Therefore, the user standing next to the vehicle is required to push or pull the battery pack into or out of the battery pack storage position located deep inside the vehicle so that a significant effort is required for the user to put or take the battery pack into or out of the vehicle.

In view of such a problem of the prior art, a primary object of the present invention is to reduce the effort required for the user to put and take an article such as a battery pack into and out of a mobile body such as a vehicle even when the storage position of the article which is the use position of the battery pack is in a part of the mobile body located at some distance from a fore and aft end thereof.

### MEANS TO ACCOMPLISH THE TASK

To achieve such an object, the present invention provides a mobile body (1) provided with a housing portion (13) configured to store an article (9) in a removable manner, wherein the housing portion is located on - i.e. closer to - one side of the mobile body with respect to a central point of the mobile body in a fore and aft direction so as to be rotatable around a rotational axis (X) extending laterally - i.e. in a lateral (left and right) direction with respect to the mobile body - while storing the article between a retaining position for retaining the article in a stored position - i.e. the stored article - and an open position facing an open side - i.e. exposing an opening - toward the one side of the mobile body (in the following also referred to as vehicle body), the housing portion being configured such that an upper part of the housing portion moves toward the one side as the housing portion rotates from the retaining position to the open position.

According to this structure, in the open position, the housing portion opens on the one side with the upper part thereof more displaced toward the one side than in the retaining position. Therefore, the user is enabled to put and take an article into and out of the housing portion in the open position in the fore and aft direction from the one side so that the putting and taking the article into and out of the housing portion is facilitated. Since the housing portion is rotatable, the user is enabled to rotate the housing portion storing the article between the retaining position and the open position with ease.

In this structure, preferably, the mobile body further includes a seating portion (35) for seating an occupant, and when the housing portion is in the retaining position, at least a part of the housing portion is lower than a lowermost part of the seating portion.

According to this structure, the housing portion in the retaining position retains at least a part of the article at a low position which is lower than the lowermost part of the seating portion. Therefore, even when the article is heavy, the center of gravity of the mobile body is prevented from rising excessively in height. Further, since the upper part of the housing portion in the open position is located more toward the one side than in the retaining position, putting and taking an article into and out of the housing portion in the retaining position is facilitated.

In this structure, preferably, at least a part of the housing portion overlaps with the seating portion in the fore and aft direction when the housing portion is in the retaining position.

According to this structure, the space under the seating portion can be advantageously used as a storage space for an article (a space which is occupied by the housing portion in the retaining position). Further, even when the storage space for the article is positioned on the one side in the fore and aft direction of the mobile body, the seating portion can be positioned on the one side in the fore and aft direction of the mobile body in an overlapping relationship to the storage space.

In this structure, preferably, an upper end portion of the housing portion in the retaining position is higher than a lowermost part of the seating portion.

According to this structure, since the upper end portion of the housing portion extends to the lowermost part of the seating portion when in the retaining position, the article can be put into and taken out of the housing portion in the open position with ease. In addition, the storage portion containing the article can be rotated with a small force.

In this arrangement, preferably, the mobile body is further provided with an exterior portion (11) integrally attached to the housing portion, and forming an exterior of the mobile body on the one side when the housing portion is in the retaining position.

Since the housing portion is placed inside the exterior portion when the housing portion is in the retaining position, the external appearance of the mobile body can be improved. Further, since the exterior portion is located below the housing portion when the housing portion is in the open position, the exterior portion does not interfere with the mounting and dismounting of the article.

In this arrangement, preferably, the exterior portion is provided outside the housing portion in the retaining position with a gap defined therebetween.

Since the housing portion is spaced from the exterior portion in the retaining position, a clearance can be secured between the exterior of the vehicle body and the article so that the article is prevented from colliding with the mobile body, and being thereby damaged.

In this arrangement, the mobile body consists of - i.e. is - a vehicle (1) having a plurality of wheels (4, 5), including a right wheel and a left wheel provided in a laterally aligned relationship - i.e. in an aligned relationship in the fore and aft direction -, wherein the housing portion is positioned between the left wheel and the right wheel in the left and right direction in such a manner that at least a part of the housing portion overlaps with the left wheel and the right wheel along a fore and aft direction - i.e. as viewed in the left and right direction - when the housing portion is in the retaining position.

Since the housing portion is positioned between the left wheel and the right wheel along the lateral direction, the stored article is protected by the left and right wheels even when an external force is applied from the lateral direction. Further, since at least a part of the housing portion overlaps with the left and right wheels with respect to the vertical direction, the center of gravity of the mobile body is prevented from becoming high even when the stored article is heavy.

In this arrangement, the housing portion is located inward of outer ends of the left wheel and the right wheel in the fore and aft direction when in the retaining position.

Thereby, the collision load applied to the mobile body at the time of a collision is absorbed by the left and right wheels so that damage to the article is minimized.

In this arrangement, the rotational axis is arranged on the one side of the housing portion, and overlaps with the left wheel and the right wheel in side view, i.e. as viewed in the left and right direction.

According to this arrangement, the collision load applied to the mobile body at the time of a collision is absorbed by the left and right wheels so that damage to the rotational axis structure and the housing portion is minimized. Further, since the rotational axis is positioned on the one side of the housing portion, the vertical displacement of the center of gravity of the article accompanying the rotation of the housing portion is minimized. Therefore, the housing portion containing the article can be rotated with a relatively small force.

In this structure, preferably, the housing portion is provided with a bottom wall (14) for supporting a bottom surface of the article and a proximal wall (15) for supporting a front surface of the article, and wherein in the retaining position, the proximal wall is located more inward than the exterior of the mobile body, and in the open position, an upper end of the proximal wall is located more outward of a region substantially immediately above the exterior.

Thereby, the article can be placed on the proximal wall of the housing portion in the open position when taking the article into and out of the housing portion with the weight of the article supported by the proximal wall of the storage unit so that the burden on the user can be minimized.

In this structure, preferably, in the open position, the upper end of the proximal wall is located more outward than the part of the exterior of the mobile body substantially immediately above the upper end of the proximal wall by a distance equal to or greater than a fore and aft dimension (D1) of the bottom surface of the article.

According to this arrangement, the entire bottom surface of the article can be placed on the proximal wall of the housing portion in the open position so that the mounting and dismounting of the article is facilitated.

In this structure, preferably, the housing portion further includes a pair of side walls (17) and a distal wall (16) lower than the proximal wall.

Since the article is received by the housing portion to be surrounded by the wall thereof, when the housing portion is rotated between the retaining position and the open position, the shifting and rattling of the article can be avoided.

In this structure, preferably, when the housing portion is in the open position, the upper end of the proximal wall is more outward than an upper end of the distal wall by a distance equal to or greater than a depth dimension (D1) of the bottom surface of the article in the fore and aft direction (L1 > D1).

Thereby, the entire bottom surface of the article can be placed on the proximal wall of the housing portion in the open position so that the mounting and dismounting of the articles can be facilitated.

In this structure, preferably, the housing portion includes a plurality of sections having bottom surfaces at a same elevation in the retaining position and each receiving an article.

Since a plurality of articles can be stored in one place, the burden on the user during the mounting and dismounting operation can be minimized. Further, since the mounting and dismounting of the articles can be performed at the same height, the work burden can be reduced.

In this structure, preferably, the article consists of a battery pack (9), and the housing portion is provided with an opening (14a) for permitting connection between a mobile body side connector (29) provided on the mobile body and a battery side connector (19) provided on the battery pack.

Thereby, an unnecessary load is prevented from being applied to the connectors when placing the battery pack into the housing portion in the open position.

In this structure, preferably, the battery side connector is configured to be connected to the mobile body side connector when the housing portion is rotated from the open position to the retaining position, and the retaining position corresponds to a use position of the battery pack in which the battery pack is retained in an upright posture while the open position corresponds to a mounting / dismounting position of the battery pack in which the battery pack is tilted toward the one side.

Thereby, the user can connect the battery side connector to the mobile body side connector by rotating the housing portion from the open position to the retaining position, and disconnect the battery side connector from the mobile body side connector by rotating the housing portion from the retaining position to the open position. Therefore, no special work process is required for connecting the connectors, and the connecting and the disconnecting of the battery pack is facilitated.

In this structure, preferably, the mobile body further includes a plurality of damper members (25) that dampen a rotational energy of the housing portion.

Thereby, the rotational speed of the housing portion is controlled so that an unduly large load is prevented from being applied to the connectors when the housing portion is rotated.

In this structure, preferably, the mobile body is an electric vehicle (1) that travels by electric power supplied by the battery pack.

Thus, when mounting and dismounting the battery pack onto and from the electric vehicle, the user can put and take the battery pack into and out of the housing portion in the open position from the one side in the fore and aft direction of the electric vehicle so that the mounting and dismounting of the battery pack is facilitated.

### EFFECT OF THE INVENTION

As discussed above, the present invention allows the effort required to put and take an article into and out of a housing portion of a mobile body in an open position to be reduced even when the retained position of the article is inwardly displaced from either outer end of the mobile body in the fore and aft direction.

### BRIEF DESCRIPTION OF THE DRAWING(S)

Figure 1 is a rear perspective view of an electric vehicle according to an embodiment of the present invention;
Figure 2 is a side view of the electric vehicle shown in Figure 1 partly seen through;
Figure 3 is a perspective view of the electric vehicle shown in Figure 1 with an exterior portion of a vehicle body of the electric vehicle opened up;
Figure 4 is an enlarged perspective view of the electric vehicle shown in Figure 3 with a battery pack removed therefrom:
Figure 5 is a side view of a battery mounting device shown in Figure 4 in a use position;
Figure 6 is a side view of the battery mounting device shown in Figure 4 in an open position;
Figure 7 is a side view of the battery mounting device shown in Figure 4 with the battery pack about to be mounted or dismounted;
Figure 8 is a side view of a battery pack housing portion in the open position shown in Figures 6 and 7;
Figure 9 is a view as seen from a direction indicated by arrow IX in Figure 7;
Figure 10 is a diagram illustrating a process of mounting and dismounting the battery pack in the state shown in Figure 7;
Figure 11 is a front perspective view of an electric vehicle according to another embodiment of the present invention; and
Figure 12 is a side view of a battery mounting device shown in Figure 11.

### DESCRIPTION OF THE PREFERRED EMBODIMENT(S)

Specific embodiments of the present invention are described in the following with reference to the appended drawings.

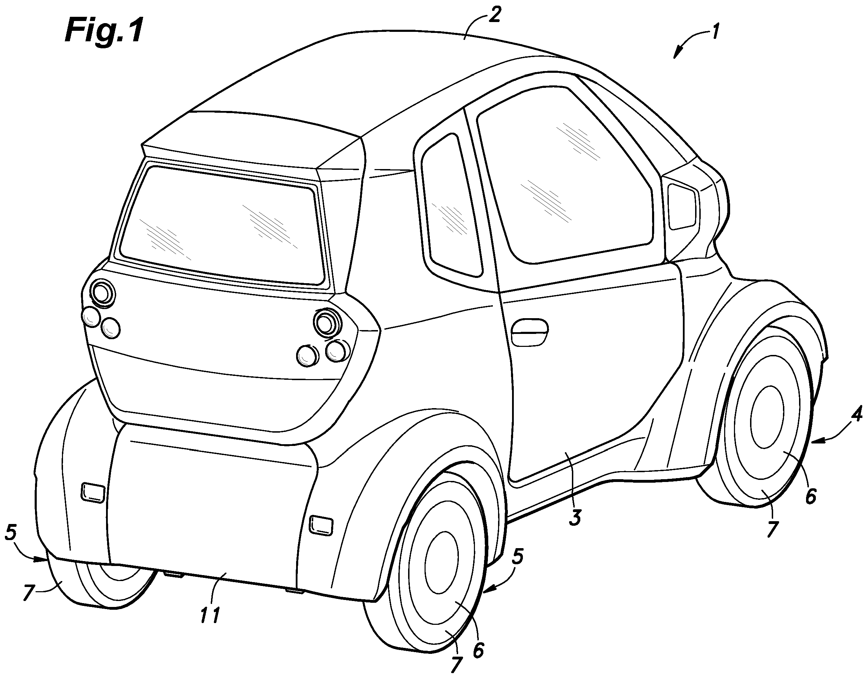

Figure 1 is a perspective view of an electric vehicle 1 according to an embodiment of the present invention as viewed from the rear. As shown in Figure 1, the electric vehicle 1 is a four-wheeled electric vehicle having a vehicle body 2, a pair of doors 3 attached to either side of the vehicle body 2, a pair of front wheels 4 provided on the right and left, and a pair of rear wheels 5 provided on the right and left. The front wheels 4 are positioned near the front end of the electric vehicle 1 in a laterally aligned relationship, and the rear wheels 5 are positioned near the rear end of the electric vehicle 1 in a laterally aligned relationship. The electric vehicle 1 is configured to travel by rotatively driving the front wheels 4 and/or the rear wheels 5 by electric motors (not shown in the drawings) mounted on the vehicle body 2. The front wheels 4 and the rear wheels 5 each include a wheel 6 and a tire 7, and serve as road wheels.

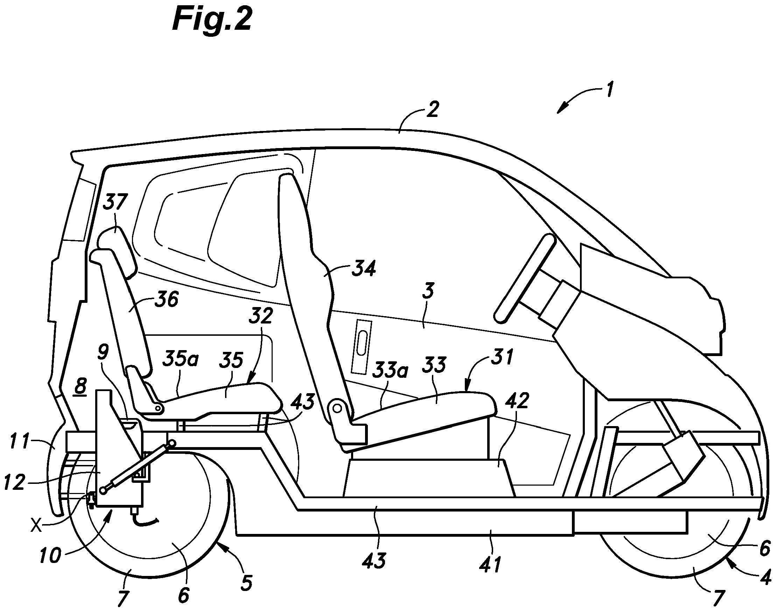

Figure 2 is a see-through side view of the electric vehicle 1 shown in Figure 1. As shown in Figure 2, the electric vehicle 1 is a two-seater vehicle including a driver's seat 31 positioned on the front side of the passenger compartment and a rear seat 32 positioned behind the driver's seat 31. The driver's seat 31 includes a front seating portion 33 (seat cushion) and a front backrest portion 34 (seatback), and a reclining mechanism allows the front backrest portion 34 to be tilted with respect to the front seating portion 33. The occupant can get on and off from the rear seat 32 by opening and closing one of the doors 3 with the front backrest portion 34 tilted forward. The rear seat 32 includes a rear seating portion 35, a rear backrest portion 36, and a headrest 37. By placing the headrest 37 at the lowest position, and tilting the rear backrest portion 36 forward by using a reclining mechanism, the occupant can use the space above the rear backrest portion 36 as a luggage space.

The driver's seat 31 is positioned between the front wheels 4 and the rear wheels 5 along the fore and aft direction, and is supported by a chassis 41 of the vehicle body 2 via a front seat support member 42. A floor member 43 is attached to the top of the chassis 41. The rear seat 32 is positioned so as to overlap with the rear wheels 5 along the fore and aft direction, and is supported by the chassis 41 via a rear seat support member 44. The chassis 41 is elevated behind the driver's seat 31 via a step, and the rear seat 32 is supported by the thus created elevated part of the floor member 43. Therefore, the rear seating portion 35 is formed thinner than the front seating portion 33, and the seating surface 35a thereof is higher than the seating surface 33a of the front seating portion 33. The floor member 43 does not include a part located behind the rear seat support member 44.

A lower rear part of the vehicle body 2 is provided with a battery chamber 8 that can be selectively opened at a rear end part thereof, and a battery mounting device 10 for mounting the battery pack 9 in the battery chamber 8. The battery mounting device 10 is formed as a battery pack mounting structure for mounting and dismounting the battery pack 9 onto and from the vehicle body 2 of the electric vehicle 1, and is provided with a vehicle body exterior portion 11 that is rotatable about a rotational axis X extending horizontally in the lateral direction to open and close the battery chamber 8. The vehicle body exterior portion 11 is a part of the exterior 2o of the vehicle body 2 (defining an outer profile of the vehicle body 2), and is located in a lower rear part of the vehicle body 2 in the form of a rear bumper face.

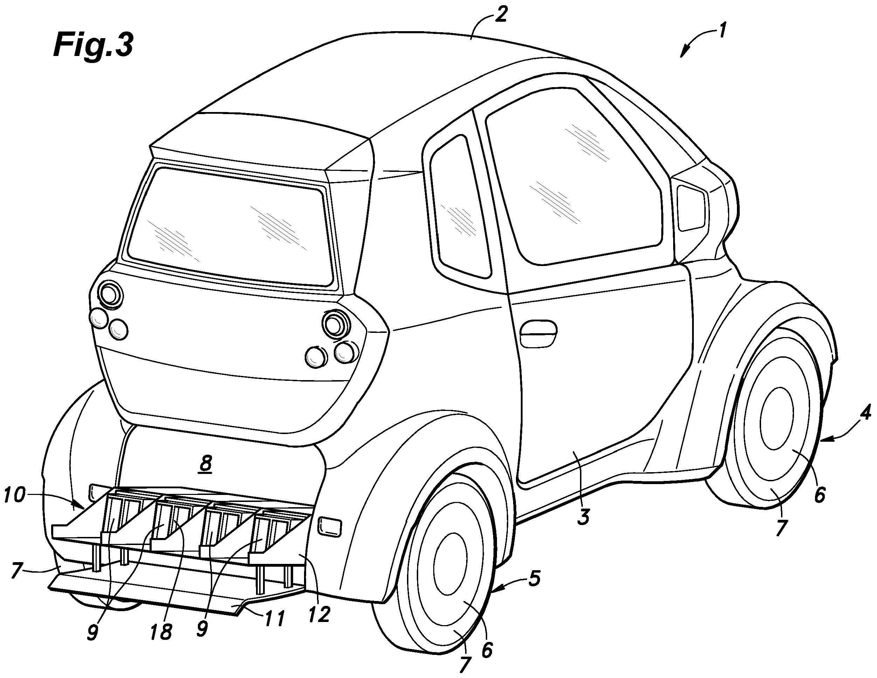

Figure 3 is a perspective view of the electric vehicle 1 shown in Figure 1 with the vehicle body exterior portion 11 in the open position. The battery mounting device 10 is provided with an opening at the top thereof for putting and taking the battery pack 9 into and out of the battery chamber 8, and further includes a battery pack housing unit 12 that supports and houses the battery pack 9 in the battery chamber 8. In the case of the battery mounting device 10 of the present embodiment, the battery pack housing unit 12 allows four battery packs 9 to be mounted on the electric vehicle 1.

The vehicle body exterior portion 11 is positioned behind the battery pack housing unit 12 in a spaced apart relationship, and is movable between a closed position for closing the battery chamber 8 to cover the battery pack housing unit 12, and an open position for exposing the battery chamber 8. In other words, the vehicle body exterior portion 11 serves as a lid member that opens and closes the battery chamber 8 in the rear end part of the vehicle body 2.

The battery pack housing unit 12 is supported by the vehicle body 2 so as to be rotatable about a rotational axis X (Figure 2) extending in the lateral direction at a lower part thereof between an upright position serving as a use position of the battery pack 9 and a proximally tilted position for mounting and dismounting the battery pack. The battery pack housing unit 12 is in the upright position when the vehicle body exterior portion 11 is in the closed position shown in Figure 1, and in the proximally tilted position with an upper part thereof displaced toward the proximal side of the battery mounting device 10 (toward the rear side of the vehicle body 2) relative to the upright position when the vehicle body exterior portion 11 is in the open position shown in Figure 3.

The upright position is a retaining position where the battery pack housing unit 12 retains the battery pack 9 placed therein in the upright posture which is the mounting posture during use. The proximally tilted position is the open position in which the battery pack housing unit 12 exposes the opening towards the rear so that the battery pack 9 can be put into and taken out of the battery pack housing unit 12.

As shown in Figure 2, the battery pack housing unit 12 is in most part lower than the lowermost part of the rear seating portion 35, and the upper end thereof is higher than the lowermost part of the rear seating portion 35 when in the upright position. As a result, when in the upright position, the battery pack housing unit 12 retains the battery pack 9 at a low position such that at least a part of the battery pack 9 is lower than the lowermost part of the rear seating portion 35. Therefore, even when the battery pack 9 is mounted, the center of gravity of the electric vehicle 1 is prevented from becoming high.

Further, when the battery pack housing unit 12 is in the upright position, at least a part of the battery pack housing unit 12 is positioned on the distal side (the front side of the vehicle body) so as to overlap with the rear seating portion 35 along the fore and aft direction. Therefore, the space defined under the rear seating portion 35 can be effectively utilized as a space for housing the battery pack 9 (a space in which the battery pack housing unit 12 is placed in the upright position). In other words, even though the housing space for the battery pack 9 is provided on the rear side of the electric vehicle 1, the rear seating portion 35 can be positioned in a sufficiently rearward position to overlap with the housing space along the fore and aft direction. The support structure for the battery pack housing unit 12 and the vehicle body exterior portion 11 will be described hereinafter.

In the present embodiment, the battery mounting device 10 is provided in the rear part of the vehicle body 2, but it suffices if the battery mounting device 10 is provided in the vicinity of the outer peripheral area that is displaced from the center of the electric vehicle 1 toward one side along the fore and aft direction. A worker who mounts and dismounts the battery pack 9 faces the battery mounting device 10 from outside of the vehicle body 2 to perform the associated work. Therefore, in the following description of the battery mounting device 10, the proximal side may be defined as the outside, and the distal side may be defined as the inside, from the viewpoint of the worker who mounts and dismounts the battery pack 9 (or the battery pack housing portion 13). In this case, since the front and rear with respect to the worker and the front and rear with respect to the vehicle body 2 of the electric vehicle 1 are opposite to each other, the front and rear with respect to the vehicle body 2 are shown in parentheses when appropriate. Further, the names and parts of the members forming the battery mounting device 10 will be referred to based on the use position of the battery pack 9 (or the upright position of the battery pack housing unit 12). Further, "proximally tilted" means leaning toward the worker (or the battery pack housing portion13), or rearwardly tilted with respect to the vehicle body. Similarly, the "lateral" means a direction parallel to the front side of the vehicle body 2 from the viewpoint of the worker (or the battery pack housing portion 13). The lateral direction in this case corresponds to the lateral direction with respect to the vehicle body 2 of the electric vehicle 1.

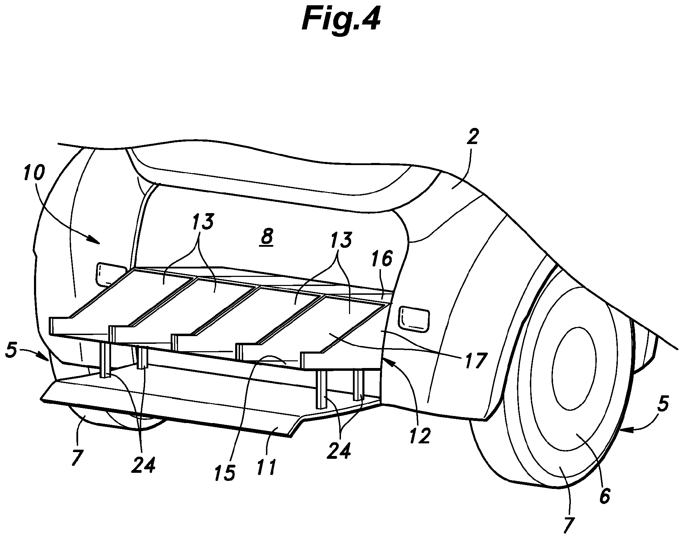

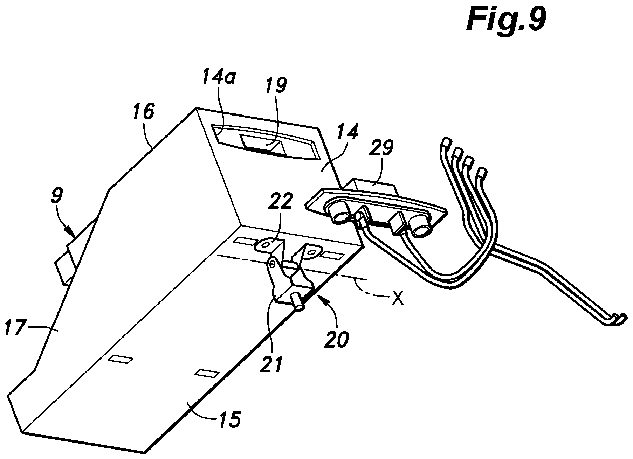

Figure 4 is an enlarged perspective view of the electric vehicle 1 shown in Figure 3 with the battery pack removed therefrom. The battery pack housing unit 12 is formed by connecting four battery pack housing portions 13 each accommodating a single battery pack 9 in a row along the lateral direction. The battery pack housing unit 12 is positioned between the two rear wheels 5. Each battery pack housing portion 13 is provided with a bottom wall 14 (Figure 9) for supporting the bottom surface of the battery pack 9, a proximal wall 15 and a distal wall 16 for supporting the proximal surface (the surface facing the rear of the vehicle) and the distal surface (the surface facing the front of the vehicle) of the battery pack 9, respectively, and a pair of side walls 17 interposing the battery pack 9 therebetween from either side.

The bottom walls 14 of the four battery pack housing portions 13 extend horizontally in the lateral direction at the same height so that the four battery packs 9 are placed at the same height. In the four battery pack housing portions 13, the proximal wall 15 and the distal wall 16 each have a constant height, and the distal wall 16 positioned in a more front part of the vehicle body is lower than the proximal wall 15 positioned in a more rear part of the vehicle body. The side walls 17 of two adjacent battery pack housing portions 13 are joined together so to form a single side wall 17 so that there are five side walls 17 for the four battery packs 9. The height of the proximal part (the rear part of the vehicle body) of each side wall 17 is equal to the height of the proximal wall 15, and the height of the distal part (the front part of the vehicle body) of each side wall 17 is equal to the height of the distal wall 16.

In a certain embodiment, the battery pack housing portion 13 is formed as an integrally molded product that houses the four battery packs 9. The side wall 17 provided between each adjacent pair of the battery packs 9 may be a wall shared by the corresponding two battery packs 9.

When the battery pack 9 (Figure 3) is in the use position, or when the battery pack housing portion 13 is in the upright position, the battery pack 9 has a vertically elongated rectangular parallelepiped shape such that the vertical dimension thereof is larger than the plane dimensions (the fore and aft dimension and the lateral dimension). In other words, the battery pack 9 takes an upright posture when it is in the use position. The planar shape of the battery pack 9 in the use position is a substantially square with the fore and aft dimension and the lateral dimension being substantially equal to each other. The upper end of the battery pack 9 is provided with a grip portion 18 configured to be gripped at the time of mounting, dismounting and transportation, and the bottom surface of the battery pack 9 is provided with a battery side connector 19 (Figure 9).

In the state shown in Figure 3 where the battery pack housing portion 13 is in the proximally tilted position, the battery pack 9 is in a mounting / dismounting position where it can be put into and taken out of the battery pack housing portion 13 with the upper part thereof tilted forward (rearward of the vehicle body) relative to the use position. Therefore, when the battery pack 9 is in the mounting / dismounting position, the grip portion 18 is located at the proximal end of the battery pack 9 (the rear end of the vehicle body), and the battery side connector 19 is located at the distal end of the battery pack 9 (the front end of the vehicle body).

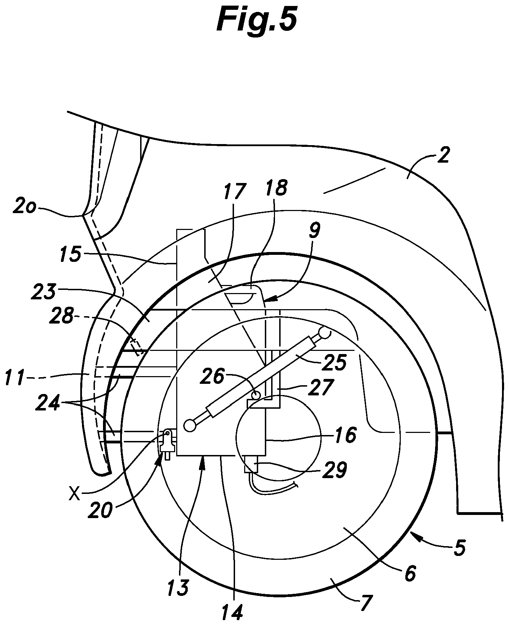

Details of the battery mounting device 10 are described in the following with reference to Figures 5 to 10. Figure 5 is a side view of the battery mounting device 10 shown in Figure 4 in the use position. As shown in Figure 5, a hinge bracket 20 having a rotational axis X extending in the lateral direction is provided in a lower part of the battery pack housing portion 13, more specifically on a part of the proximal wall 15 of the battery pack housing portion 13 near the lower end thereof. The hinge bracket 20 is formed by rotatably connecting a vehicle body side member 21 (Figure 9) fixed to the vehicle body 2 and a battery side member 22 (Figure 9) fixed to the battery pack housing portion 13 to each other. The vehicle body side member 21 is supported by the rear side frames 23 positioned on the inner sides of the rear wheels 5, respectively, and extending rearward of the vehicle body, via a suspending member (not shown in the drawings). The rotational axis X of the hinge bracket 20 is positioned on the proximal side of the battery pack housing portion 13 (in the rear part of the vehicle body), and overlaps with the rear wheels 5 in side view. In the present embodiment, the rotational axis X is located on the proximal side of the axle (in the rear part of the vehicle body) at substantially the same height as the axle of the rear wheels 5.

The vehicle body exterior portion 11 is provided integrally to the battery pack housing portion 13. More specifically, the vehicle body exterior portion 11 is connected to the proximal wall 15 of the battery pack housing portion 13 by four connecting members 24 provided on the upper, lower, left and right sides. Therefore, the vehicle body exterior portion 11 can rotate integrally with the battery pack housing portion 13 about the rotational axis X of the battery pack housing portion 13. The vehicle body exterior portion 11 is in a closed position to cover the battery pack housing portion 13 in the battery chamber 8 when the battery pack housing portion 13 is in the upright position.

A damper member 25 is provided between the battery pack housing portion 13 and the vehicle body 2. One end of the damper member 25 is connected to the rear side frame 23 of the vehicle body 2, and the other end of the damper member 25 is connected to the side wall 17 of the battery pack housing portion 13. As the battery pack housing portion 13 is rotated with respect to the vehicle body 2, the damper member 25 changes its length, and thereby dissipates the rotational energy of the battery pack housing portion 13.

A side surface of the battery pack housing portion 13 is fitted with an engagement protrusion 26 protruding laterally. The vehicle body 2 is provided with an upright position restricting member 27 that restricts further rotation of the battery pack housing portion 13 toward the distal side (to the front of the vehicle body) by engaging the engagement protrusion 26 when the battery pack housing portion 13 is brought to the upright position shown in Figure 5. The upright position restricting member 27 fixedly depends from the rear side frame 23.

When the battery mounting device 10 is in the use position, at least a part of the battery pack housing portion 13 which is in the upright position overlaps with the rear wheels 5 along the vertical direction. In other words, the battery pack housing portion 13 is positioned between the left and right rear wheels 5. Owing to this arrangement, the battery pack 9 is protected by the left and right rear wheels 5 when an external force is applied to the vehicle body 2 from the lateral direction. Further, since at least a part of the battery pack housing portion 13 overlaps with the rear wheels along the vertical direction, the center of gravity of the electric vehicle 1 is prevented from becoming high in spite of the large weight of the battery pack 9.

Further, when the battery mounting device 10 is in the use position, the proximal wall 15 which is in the upright position is located on the distal side (to the front of the vehicle body) of the outer ends of the rear wheels 5 (front end of the outer profile of the tire 7) which may be considered as a structural part of the electric vehicle 1. Therefore, the collision load that may be applied to the vehicle body 2 at the time of a collision of the electric vehicle 1 is absorbed by the tires 7 of the rear wheels 5 so that the battery pack 9 is effectively protected and damage to the battery pack 9 is minimized.

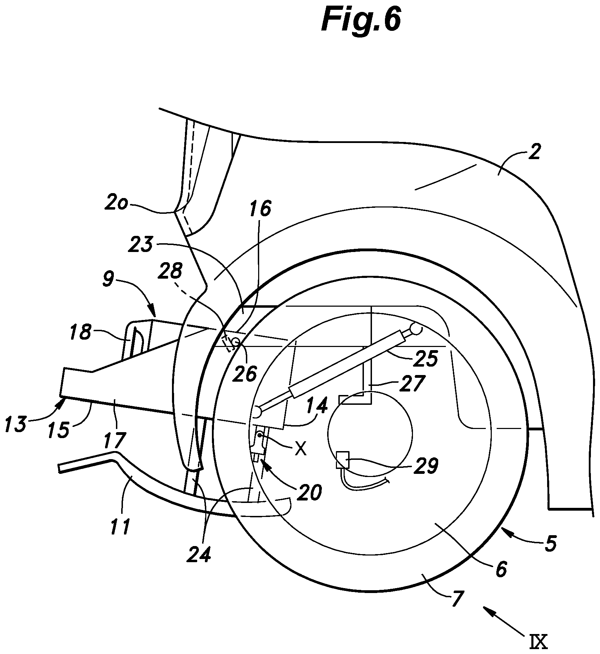

Figure 6 is a side view of the battery mounting device 10 shown in Figure 4 in the open position. As shown in Figure 6, the battery pack housing portion 13 is rotatable around the rotational axis X of the hinge bracket 20 from the upright position to the proximal side (to the rear of the vehicle body). The vehicle body 2 is provided with a proximally tilted position restricting member 28 that restricts the further forward rotation of the battery pack housing portion 13 when the battery pack housing portion 13 is in the proximally tilted position shown in Figure 6 by engaging the engagement protrusion 26. The proximally tilted position restricting member 28 is provided on the rear side frame 23.

The proximally tilted position is set to a certain rotation angle such that the proximal wall 15 of the battery pack housing portion 13 has a downward slope toward the distal side (toward the front of the vehicle body) from the upper end (upper end in the upright position) to the lower end thereof. When the battery pack housing portion 13 is in the proximally tilted position, the vehicle body exterior portion 11 is located below the battery pack housing portion 13 and is in the open position for exposing the battery chamber 8.

As discussed earlier with reference to Figure 2, the battery pack housing portion 13 is arranged such that the upper end thereof is higher than the lowermost part of the rear seating portion 35 when in the upright position. When the battery pack housing portion 13 in the upright position, since the upper end portion of the battery pack housing portion 13 extends upward such that the upper end portion thereof is higher than the lowermost part of the rear seating portion 35, the upper end portion is significantly displaced to the proximal side (to the back of the vehicle body) so that the taking and putting the battery pack 9 out of and into of the battery pack housing portion 13 in the proximally tilted position is facilitated. Further, the battery pack housing portion 13 containing the battery pack 9 can be rotated with a small force.

As discussed above, the rotational axis X of the hinge bracket 20 is positioned on the proximal side of the battery pack housing portion 13, and overlaps with the rear wheels 5 is side view. Owing to this arrangement, the collision load that may be applied to the electric vehicle 1 at the time of a collision is absorbed by the rear wheels 5 so that damage to the hinge bracket 20 and the battery pack housing portion 13 can be minimized. Further, since the rotational axis X of the hinge bracket 20 is positioned on the one side of the battery pack housing portion 13, the vertical displacement of the center of gravity of the battery pack 9 during the rotation of the battery pack housing portion 13 is minimized. As a result, the battery pack housing portion 13 containing the battery pack 9 can be rotated with a small force.

Figure 9 is a view as seen from the direction indicated by arrow IX in Figure 6. As shown in Figure 9, an opening 14a is provided in a distal side of the bottom wall 14 of the battery pack housing portion 13 (a front side of the vehicle body, and an upper part of the bottom wall 14 in the proximally tilted position). The battery side connector 19 is positioned so as to face (oppose) the opening 14a. A vehicle side connector 29 is provided at a position corresponding to the opening 14a when the battery pack 9 is in the use position shown in Figure 5. The vehicle side connector 29 is supported by the vehicle body 2, and when the battery pack 9 is in the use position shown in Figure 5, the battery side connector 19 is connected to the vehicle side connector 29 through the opening 14a. By providing the opening 14a in the bottom wall 14 in this manner, the battery side connector 19 can be directly connected to the vehicle side connector 29.

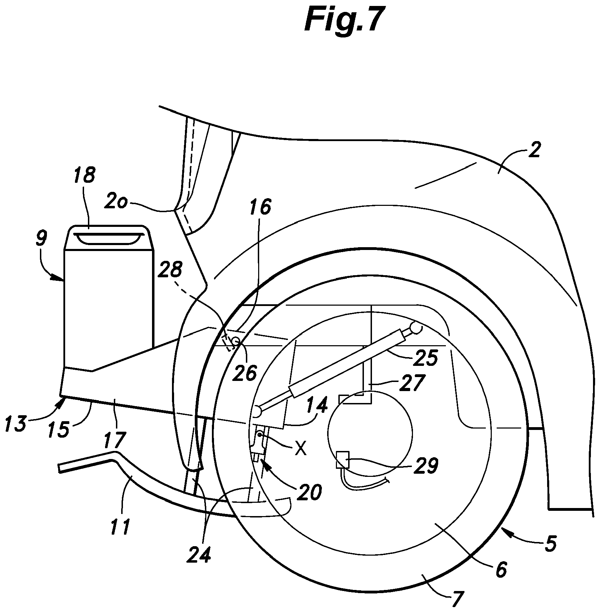

Figure 7 is a side view of the battery mounting device 10 shown in Figure 4 in the mounting / dismounting position. As shown in Figure 7, when the battery pack housing portion 13 is in the proximally tilted position, the upper end of the proximal wall 15 of the battery pack housing portion 13 is located outside the part of the exterior 2o of the vehicle body 2 located substantially immediately above the upper end of the proximal wall 15 (in the back of the vehicle body). Therefore, the worker can take and put the battery pack 9 out of and into the battery pack housing portion 13 by holding the grip portion 18 while the battery pack 9 is in the vertically elongated state, and allowing the weight of the battery pack 9 to be supported by the proximal wall 15 of the battery pack housing portion 13 in the proximally tilted position. As a result, the burden on the worker for mounting and dismounting the battery pack 9 can be minimized.

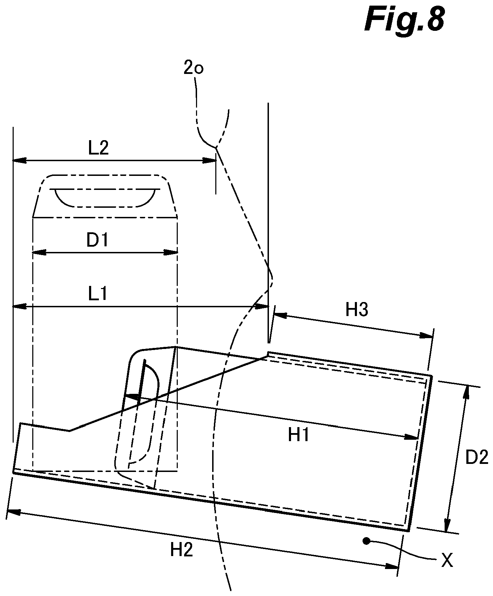

Various dimensions of the battery mounting device 10 when the battery pack housing portion 13 is in the proximally tilted position are discussed in the following. Figure 8 is a side view of the battery pack housing portion 13 in the open position shown in Figures 6 and 7. As shown in Figure 8, the battery pack 9 takes a vertically elongated rectangular parallelepiped posture at the time of mounting / dismounting, similarly to the posture in the use position (see Figure 5). At this time, the battery pack 9 has a depth dimension D1 measured along the fore and aft direction, or a depth dimension D1 of the bottom surface thereof measured along the fore and aft direction, and a height H1.

The battery pack housing portion 13 defines a housing space having a depth dimension D2 which is slightly larger than the depth dimension D1 of the battery pack 9. The height H2 of the proximal wall 15 of the battery pack housing portion 13 is larger than the height H1 of the battery pack 9, and the height H3 of the distal wall 16 of the battery pack housing portion 13 is smaller than the height H1 of the battery pack 9. The upper end of the proximal wall 15 of the battery pack housing portion 13 is located more on the proximal side than the upper end of the distal wall 16 of the battery pack housing portion 13 (to the rear of the vehicle body) by a dimension (distance) L1. The dimension L1 is larger than the depth dimension D1 of the battery pack 9 and larger than the difference between the height H2 of the proximal wall 15 and the height H3 of the distal wall 16.

Thus, when the battery pack housing portion 13 is in the proximally tilted position, the upper end of the proximal wall 15 is located outward of the upper end of the distal wall 16 by a distance greater than the depth dimension D1 of the bottom surface of the battery pack 9 along the fore and aft direction (L1 > D1). Therefore, the entire bottom surface of the battery pack 9 can be placed on the proximal wall 15 of the battery pack housing portion 13 in the proximally tilted position. Therefore, the mounting / dismounting work of the battery pack 9 is facilitated.

The upper end of the distal wall 16 of the battery pack housing portion 13 is located inside the vehicle body (to the front of the vehicle body) which is on the inner side of the part of the exterior 2o of the vehicle body 2 located substantially immediately above the upper end of the distal wall 16. Therefore, the dimension L2 by which the upper end of the proximal wall 15 projects in the proximal direction from the exterior 2o of the vehicle body 2 (toward the rear side of the vehicle body) is smaller than the protruding dimension L1 by which the upper end of the proximal wall 15 projects in the proximal direction relative to the upper end of the distal wall 16.

On the other hand, the dimension L2 by which the upper end of the proximal wall 15 projects in the proximal direction (to the rear of the vehicle body) with respect to the exterior 2o of the vehicle body 2 is larger than the depth dimension D1 of the battery pack 9 (L2 > D1). In other words, the upper end of the proximal wall 15 in the proximally tilted position is positioned outside of the part of the exterior 2o of the vehicle body 2 located substantially immediately above the upper end of the proximal wall 15 by at least the depth dimension D 1 of the bottom surface of the battery pack 9 as measured along the fore and aft direction. Therefore, the entire bottom surface of the battery pack 9 can be placed on the battery pack housing portion 13 in the proximally tilted position so that the mounting / dismounting work of the battery pack 9 is facilitated.

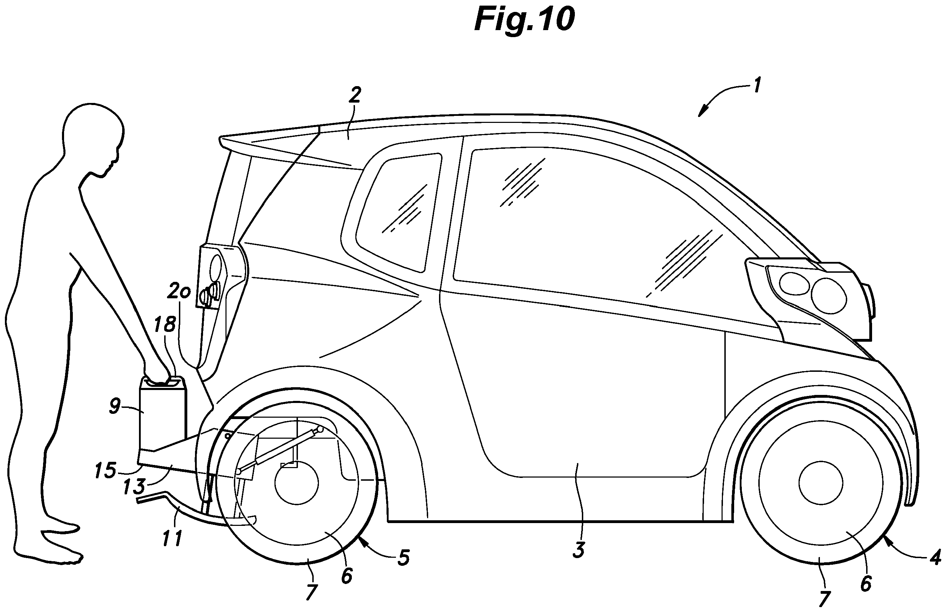

Figure 10 is an explanatory diagram of the battery pack mounting / dismounting work in the mounting / dismounting position shown in Figure 7. As shown in Figure 10, since the size of the battery mounting device 10 is selected as discussed above, the worker can place the battery pack 9 on the proximal wall 15 of the battery pack housing portion 13 in the vertically elongated position with the battery pack 9 located on the proximal side of the exterior 2o of the vehicle body 2 (to the rear side of the vehicle body). More specifically, the entire bottom surface of the battery pack 9 can be placed on the proximal wall 15 of the battery pack housing portion 13.

When mounting the battery pack 9 on the electric vehicle 1, the worker pushes the battery pack 9 to the distal side (toward the front side of the vehicle body) while tilting the grip portion 18 toward the proximal side (toward the rear side of the vehicle body) from this state until the bottom surface of the battery pack 9 is supported by the bottom wall 14 of the battery pack housing portion 13 (see Figure 6). Thereafter, the worker rotates the battery pack housing portion 13 and the vehicle body exterior portion 11 upward into the upright position with the result that the battery pack 9 is placed in the use position (see Figure 5).

When removing the battery pack 9 from the electric vehicle 1, the worker rotates the battery pack housing portion 13 and the vehicle body exterior portion 11 which are in the upright position (Figure 5) toward the proximal side (toward the rear of the vehicle body) to place the battery pack housing portion 13 in the mounting / dismounting position. As a result, the battery pack 9 is placed in the mounting / dismounting position (Figure 6). The worker then pulls the grip portion 18 toward the proximal side (toward the rear of the vehicle body) until the bottom surface of the battery pack 9 is positioned near the front end of the proximal wall 15 of the battery pack housing portion 13. Thereafter, the worker pulls up the grip portion 18 to raise the battery pack 9, places the battery pack 9 on the proximal wall 15 of the battery pack housing portion 13 (see Figures 7 and 10), and lifts the battery pack 9. By performing the work in this way, the worker can easily mount and dismount the battery pack 9.

As described above, in the present embodiment, the battery pack housing portion 13 is arranged so as to be displaced rearward with respect to the center of the electric vehicle 1 in the fore and aft direction, and so as to be rotatable around the rotational axis X extending in the lateral direction of the electric vehicle 1 between the retaining position for retaining the received battery pack 9 and the open position exposing the battery pack housing portion 13 toward the rear side of the electric vehicle 1. As the battery pack housing portion 13 is rotated from the retaining position to the open position, the upper portion thereof is displaced toward the proximal side (rearward of the vehicle body). In other words, in the open position, the battery pack housing portion 13 is exposed toward the rear with the upper part thereof displaced rearward as compared to the retaining position. Therefore, when putting / taking the battery pack 9 into and out of the electric vehicle 1, the worker can put / take the battery pack 9 into / out of the battery pack housing portion 13 in the open position from the rear side of the electric vehicle 1 in a facilitated manner. Further, since the battery pack housing portion 13 is configured to be rotatable, the worker can easily rotate the battery pack housing portion 13 containing the battery pack 9 between the retaining position and the open position.

In this embodiment, as shown in Figure 4, the battery pack housing portion 13 includes, in addition to the bottom wall 14 and proximal wall 15, the two side walls 17 and the distal wall 16 which is lower than the proximal wall 15. Therefore, the battery pack 9 is housed in the battery pack housing portion 13 surrounded by the battery pack housing portion 13. As a result, when the battery pack housing portion 13 is rotated between the upright position and the proximally tilted position, the shifting and rattling of the battery pack 9 is minimized.

As shown in Figures 5 and 6, the vehicle body exterior portion 11 that is provided outside the battery pack housing portion 13 in the upright position, and forms a part of the exterior 2o of the vehicle body 2 is movable between the closed position for covering the battery pack housing portion 13 and the open position. Therefore, the external appearance of the electric vehicle 1 is improved. Further, since the battery pack housing portion 13 is spaced from the vehicle body exterior portion 11 in the upright position, a clearance is secured between the exterior 2o of the vehicle body 2 and the battery pack 9. As a result, damage to the battery pack 9 at the time of a vehicle collision can be minimized.

As described above, the vehicle body exterior portion 11 is supported by the battery pack housing portion 13, and the vehicle body exterior portion 11 is located below the battery pack housing portion 13 when the battery pack housing portion 13 is in the proximally tilted position. Therefore, the vehicle body exterior portion 11 does not interfere with the mounting / dismounting work of the battery pack 9.

In this embodiment, as shown in Figure 9, the bottom wall 14 of the battery pack housing portion 13 is provided with the opening 14a for allowing the vehicle side connector 29 provided on the vehicle body 2 to be connected to the battery side connector 19 provided on the battery pack 9. Therefore, as shown in Figures 6 and 7, when placing the battery pack 9 in the battery pack housing portion 13 in the proximally tilted position, an unnecessary load is not applied to the connectors (19, 29).

The battery side connector 19 is connected to the vehicle side connector 29 when the battery pack housing portion 13 is rotated from the proximally tilted position (open position), which is the mounting / dismounting position of the battery pack 9, to the upright position (retaining position), which is the use position of the battery pack 9 shown in Figure 5. In this way, the worker can connect the battery side connector 19 to the vehicle side connector 29 by rotating the battery pack housing portion 13 from the proximally tilted position to the upright position. Conversely, the worker can pull out the battery side connector 19 from the vehicle side connector 29 by rotating the battery pack housing portion 13 from the upright position to the proximally tilted position. Therefore, the connecting work of the battery side connector 19 is not required, and the mounting / dismounting work of the battery pack 9 is facilitated.

At this time, the damper member 25 that is connected between the vehicle body 2 and the battery pack housing portion 13 attenuates the rotational energy of the battery pack housing portion 13. Therefore, the rotational speed of the battery pack housing portion 13 is reduced so that an excessive load is prevented from being applied to the connectors (19, 29) when the battery pack housing portion 13 is rotated.

As shown in Figure 4, the battery pack housing portion 13 houses multiple battery packs 9, and the bottom walls 14 are at the same height in the upright position shown in Figure 5. As a result, the mounting positions of the battery packs 9 are unified into a single position so that the burden on the worker during the battery pack mounting / dismounting work is minimized. Further, as shown in Figure 10, the work of mounting and dismounting multiple battery packs 9 can be performed at the same height so that the work load is minimized.

The present invention has been described in terms of a specific embodiment, but is not limited by such an embodiment and can be widely modified without departing from the scope of the appended claims.

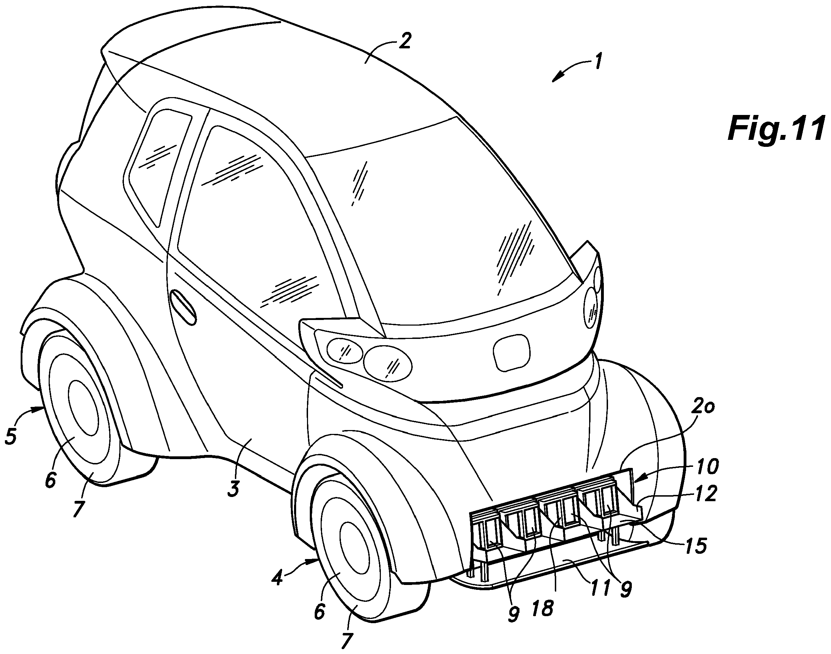

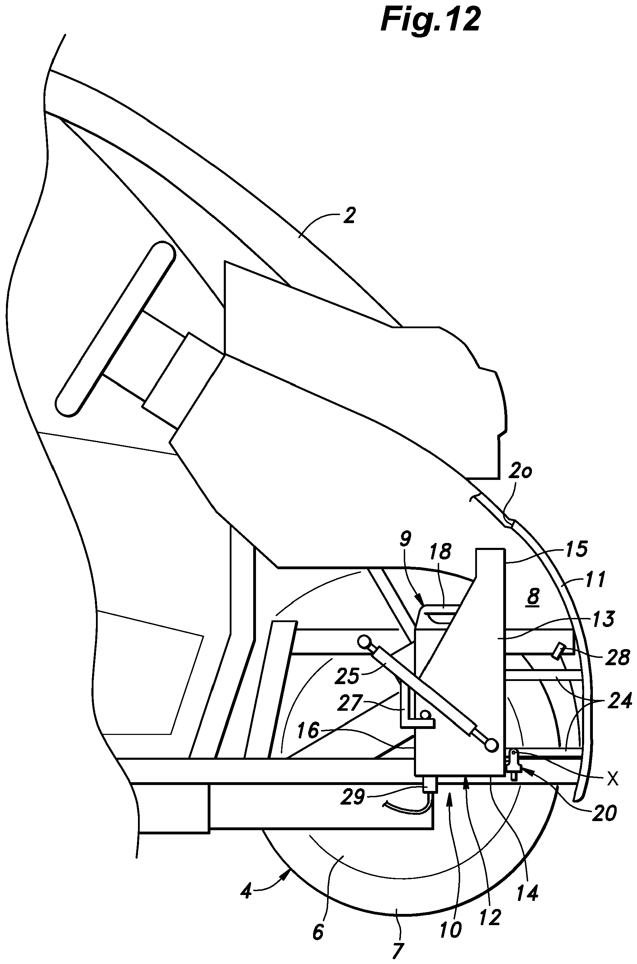

For example, in the foregoing embodiment, the battery pack housing portion 13 is displaced toward the rear side of the vehicle body 2, but as shown in Figure 11, the battery pack housing portion 13 may also be displaced toward the front side of the vehicle body 2. Figure 12 is a side view of the battery mounting device 10 shown in Figure 11 in the use position. As shown in Figures 11 and 12, when the battery pack housing portion 13 is rotated from the retaining position to the open position, the upper part thereof is displaced toward the proximal side (toward the front of the vehicle body). Thus, in the open position, the battery pack housing portion 13 is exposed to the front side with the upper part thereof displaced to the front side as compared to the retaining position. Therefore, when mounting / dismounting the battery pack 9 on and from the electric vehicle 1, the worker can put / take the battery pack 9 into / out of the battery pack housing portion 13 in the open position from the front side of the electric vehicle 1 with ease.

In this case also, preferably, the upper end of the proximal wall 15 in the proximally tilted position is located outside of the part of the exterior 2o of the vehicle body 2 located substantially immediately above the upper end of the proximal wall 15, and the proximal wall 15 in the upright position is located inward of the outer profile of the tires 7 of the front wheels 4 forming a structural part of the electric vehicle 1. Since the upper end of the proximal wall 15 in the proximally tilted position is located outside the part of the exterior 2o of the vehicle body 2 located substantially immediately above the upper end of the proximal wall 15 in this manner, the worker can mount and dismount the battery pack 9 with the load of the battery pack 9 supported by the proximal wall 15 so that the burden on the worker during the mounting and dismounting work can be minimized. Further, since the collision load that may be applied at the time of a collision of the electric vehicle 1 can be absorbed by the tires 7 of the front wheels 4 of the electric vehicle 1, damage to the battery pack 9 can be minimized.

Further, in the foregoing embodiments, the present invention was applied to a four-wheeled electric vehicle 1 having a battery pack mounting structure as an example, but the present invention is widely applicable to railway vehicles and road vehicles as well as to hybrid vehicles using both an internal combustion engine and an electric motor as a prime mover. Further, the battery mounting device 10 is not limited to one for mounting four battery packs 9 on the electric vehicle 1, and the battery mounting device 10 may also be configured to mount three or less or five or more battery packs 9 on the electric vehicle 1.

Further, the present invention is not limited to electric vehicles 1, but can be widely applied to automobiles using only an internal combustion engine as a drive source, and other moving bodies such as watercraft, hovercraft, and aircraft. Further, the article accommodated in the housing portion of the present invention is not limited to the battery pack 9, but may also be any other article, such as a fuel tank, drinking water containers, foods, daily necessities, etc., as long as it can be mounted and dismounted on and from a mobile body.

In addition, the specific configuration, arrangement, quantity, angle, etc. of each member or part can be appropriately changed within a range not departing from the scope of the appended claims.

In addition, not all of the constituent elements shown in the foregoing embodiments are necessarily essential, but can be appropriately selected and substituted.

**LIST OF REFERENCE NUMERALS**

| | | | |
|---|---|---|---|
| 1 | electric vehicle | 2o | exterior |
| 4 | front wheel | 5 | rear wheel |
| 6 | wheel | 7 | tire |
| 8 | battery space | 9 | battery pack |
| 10 | battery mounting device | 11 | vehicle body exterior portion |
| 12 | battery pack storage unit | 13 | battery pack housing portion |
| 14 | bottom wall | 14a | opening |
| 15 | proximal wall | 16 | distal wall |
| 17 | side wall | 19 | grip portion |
| 19 | battery side connector | 20 | hinge bracket |
| 25 | damper member | 29 | vehicle side connector |
| 35 | rear seating portion | | |
| D1 | depth dimension of the bottom surface of the battery pack 9 | | |
| L1 | distance by which the upper end of the proximal wall 15 is located more forward than the upper end of the distal wall 16 | | |
| L2 | distance by which the upper end of the proximal wall 15 is spaced from the exterior 2o of the vehicle body 2 | | |
| X | rotational axis | | |

## Claims

1. A mobile body (1) provided with a housing portion (13) configured to store an article (9) in a removable manner,
wherein the housing portion (13) is closer to one side of the mobile body (1) with respect to a central point of the mobile body (1) in a fore and aft direction so as to be rotatable around a rotational axis (X) extending in a left and right direction with respect to the mobile body (1) while storing the article (9) between a retaining position for retaining the stored article (9) and an open position exposing an opening toward the one side of the mobile body (1), the housing portion (13) being configured such that an upper part of the housing portion (13) moves toward the one side as the housing portion (13) rotates from the retaining position to the open position,
wherein the mobile body (1) is a vehicle (1) having a plurality of wheels (4, 5), including a right wheel and a left wheel provided in an aligned relationship in the fore and aft direction, wherein the housing portion (13) is positioned between the left wheel and the right wheel in the left and right direction in such a manner that at least a part of the housing portion (13) overlaps with the left wheel and the right wheel as viewed in the left and right direction when the housing portion (13) is in the retaining position, and
wherein the housing portion (13) is located inward of outer ends of the left wheel and the right wheel in the fore and aft direction when in the retaining position,
**characterized in that** the rotational axis (X) is arranged on the one side of the housing portion (13), and overlaps with the left wheel and the right wheel as viewed in the left and right direction.

2. A mobile body (1) according to claim 1, wherein the mobile body (1) further includes a seating portion (35) for seating an occupant, and when the housing portion (13) is in the retaining position, at least a part of the housing portion (13) is lower than a lowermost part of the seating portion (35).

3. A mobile body (1) according to claim 2, wherein at least a part of the housing portion (13) overlaps with the seating portion (35) in the fore and aft direction when the housing portion (13) is in the retaining position.

4. A mobile body (1) according to claim 3, wherein an upper end portion of the housing portion (13) in the retaining position is higher than a lowermost part of the seating portion (35).

5. A mobile body (1) according to any one of claims 1 to 4, wherein the mobile body (1) is further provided with an exterior portion (11) integrally attached to the housing portion (13), and forming an exterior (2o) of the mobile body (1) on the one side when the housing portion (13) is in the retaining position.

6. A mobile body (1) according to claim 5, wherein the exterior portion (11) is provided outside the housing portion (13) in the retaining position with a gap defined therebetween.

7. A mobile body (1) according to any one of claims 1 to 6, wherein the housing portion (13) is provided with a bottom wall (14) for supporting a bottom surface of the article (9) and a proximal wall (15) for supporting a front surface of the article (9), and wherein in the retaining position, the proximal wall (15) is located more inward than the exterior (2o) of the mobile body (1), and in the open position, an upper end of the proximal wall (15) is located more outward of a region substantially immediately above the exterior (2o).

8. A mobile body (1) according to claim 7, wherein, in the open position, the upper end of the proximal wall (15) is located more outward than the part of the exterior (2o) of the mobile body (1) substantially immediately above the upper end of the proximal wall (15) by a distance equal to or greater than a fore and aft dimension (D1) of the bottom surface of the article (9).

9. A mobile body (1) according to claim 7 or 8, wherein the housing portion (13) further includes a pair of side walls (17) and a distal wall (16) lower than the proximal wall (15).

10. A mobile body (1) according to claim 9, wherein when the housing portion (13) is in the open position, the upper end of the proximal wall (15) is more outward than an upper end of the distal wall (16) by a distance (L1) equal to or greater than a depth dimension (D1) of the bottom surface of the article (9) in the fore and aft direction.

11. A mobile body (1) according to claim 10, wherein the housing portion (13) includes a plurality of sections having bottom surfaces at a same elevation in the retaining position and each receiving an article (9).

12. A mobile body (1) according to any one of claims 1 to 11, wherein the article (9) consists of a battery pack (9), and the housing portion (13) is provided with an opening (14a) for permitting connection between a mobile body side connector (29) provided on the mobile body (1) and a battery side connector (19) provided on the battery pack (9).

13. A mobile body (1) according to claim 12, wherein the battery side connector (19) is configured to be connected to the mobile body side connector (29) when the housing portion (13) is rotated from the open position to the retaining position, and the retaining position corresponds to a use position of the battery pack (9) in which the battery pack (9) is retained in an upright posture while the open position corresponds to a mounting / dismounting position of the battery pack (9) in which the battery pack (9) is tilted toward the one side.

14. A mobile body (1) according to claim 13, wherein the mobile body (1) further includes a plurality of damper members (25) that dampen a rotational energy of the housing portion (13).

15. A mobile body (1) according to any one of claims 12 to 14, wherein the vehicle of the mobile body (1) is an electric vehicle (1) that travels by electric power supplied by the battery pack (9).

## Patentansprüche

1. Mobiler Körper (1), der mit einem Gehäusebereich (13) vorgesehen ist, der ausgestaltet ist, einen Gegenstand (9) in entfernbarer Weise aufzubewahren,
wobei sich der Gehäusebereich (13) näher an einer Seite des mobilen Körpers (1) bezüglich eines Mittelpunkts des mobilen Körpers (1) in einer Längsrichtung befindet, um so, während er den Gegenstand (9) aufbewahrt, um eine Rotationsachse (X), die in einer linken und rechten Richtung bezüglich des mobilen Körpers (1) verläuft, rotierbar zu sein zwischen einer Rückhalteposition zum Halten des aufbewahrten Gegenstands (9) und einer geöffneten Position, die eine Öffnung zu der einen Seite des mobilen Körpers (1) freilegt, wobei der Gehäusebereich (13) dergestalt ausgestaltet ist, dass sich ein oberer Teil des Gehäusebereichs (13) zu der einen Seite bewegt, wenn der Gehäusebereich (13) von der Rückhalteposition in die geöffnete Position rotiert,
wobei der mobile Körper (1) ein Fahrzeug (1) ist, das eine Vielzahl von Rädern (4, 5) hat, die ein rechtes Rad und ein linkes Rad aufweisen, die in einer ausgerichteten Beziehung in der Längsrichtung vorgesehen sind, wobei der Gehäusebereich (13) zwischen dem linken Rad und dem rechten Rad in der linken und rechten Richtung in einer solchen Weise positioniert ist, dass wenigstens ein Teil des Gehäusebereichs (13) mit dem linken Rad und dem rechten Rad in der linken und rechten Richtung betrachtet überlappt, wenn der Gehäusebereich (13) sich in der Rückhalteposition befindet, und
wobei der Gehäusebereich (13) von äußeren Enden des linken Rads und des rechten Rads in der Längsrichtung innen angeordnet ist, wenn er sich in der Rückhalteposition befindet,
**dadurch gekennzeichnet, dass** die Rotationsachse (X) an der einen Seite des Gehäusebereichs (13) angeordnet ist, und mit dem linken Rad und dem rechten Rad in der linken und rechten Richtung betrachtet überlappt.

2. Mobiler Körper (1) nach Anspruch 1, wobei der mobile Körper (1) weiterhin einen Sitzbereich (35) zum Sitzen eines Fahrers aufweist, und, wenn der Gehäusebereich (13) sich in der Rückhalteposition befindet, wenigstens ein Teil des Gehäusebereichs (13) niedriger als ein unterster Teil des Sitzbereichs (35) ist.

3. Mobiler Körper (1) nach Anspruch 2, wobei wenigstens ein Teil des Gehäusebereichs (13) mit dem Sitzbereich (35) in der Längsrichtung überlappt, wenn sich der Gehäusebereich (13) in der Rückhalteposition befindet.

4. Mobiler Körper (1) nach Anspruch 3, wobei ein oberer Endbereich des Gehäusebereichs (13) in der Rückhalteposition höher als ein unterster Teil des Sitzbereichs (35) ist.

5. Mobiler Körper (1) nach einem der Ansprüche 1 bis 4, wobei der mobile Körper (1) weiterhin mit einem Außenbereich (11) vorgesehen ist, der integral am Gehäusebereich (13) angebracht ist und eine Außenseite (20) des mobilen Körpers (1) an der einen Seite bildet, wenn der Gehäusebereich (13) sich in der Rückhalteposition befindet.

6. Mobiler Körper (1) nach Anspruch 5, wobei der Außenbereich (11) außerhalb des Gehäusebereichs (13) in der Rückhalteposition vorgesehen ist, wobei dazwischen ein Abstand definiert ist.

7. Mobiler Körper (1) nach einem der Ansprüche 1 bis 6, wobei der Gehäusebereich (13) mit einer Bodenwand (14), um eine Bodenfläche des Gegenstands (9) zu halten, und einer proximalen Wand (15), um eine Vorderfläche des Gegenstands (9) zu halten, vorgesehen ist, und wobei in der Rückhalteposition die proximale Wand (15) sich weiter innen als die Außenseite (20) des mobilen Körpers (1) befindet, und in der geöffneten Position sich ein oberes Ende der proximalen Wand (15) weiter außen von einem Gebiet im Wesentlichen direkt über der Außenseite (20) befindet.

8. Mobiler Körper (1) nach Anspruch 7, wobei in der geöffneten Position das obere Ende der proximalen Wand (15) sich weiter außen als der Teil der Außenseite (20) des mobilen Körpers (1) im Wesentlichen direkt über dem oberen Ende der proximalen Wand (15) durch einen Abstand gleich oder größer als eine Längsabmessung (D1) der Bodenfläche des Gegenstands (9) befindet.

9. Mobiler Körper (1) nach Anspruch 7 oder 8, wobei der Gehäusebereich (13) weiterhin ein Paar von Seitenwänden (17) und eine distale Wand (16) niedriger als die proximale Wand (15) aufweist.

10. Mobiler Körper (1) nach Anspruch 9, wobei, wenn der Gehäusebereich (13) sich in der geöffneten Position befindet, sich das obere Ende der proximalen Wand (15) in einem Abstand (L1) gleich oder größer als eine Tiefenabmessung (D1) der Bodenfläche des Gegenstands (9) in der Längsrichtung weiter außen als ein oberes Ende der distalen Wand (16) befindet.

11. Mobiler Körper (1) nach Anspruch 10, wobei der Gehäusebereich (13) eine Vielzahl von Abschnitten aufweist, die Bodenflächen in der gleichen Erhebung in der Rückhalteposition haben und ein jeder einen Gegenstand (9) aufnimmt.

12. Mobiler Körper (1) nach einem der Ansprüche 1 bis 11, wobei der Gegenstand (9) aus einer Batteriepackung (9) besteht und der Gehäusebereich (13) mit einer Öffnung (14a) vorgesehen ist, um eine Verbindung zwischen einem Verbindungselement (29) des mobilen Körpers, das am mobilen Körper (1) vorgesehen ist, und einem batterieseitigen Verbindungselement (19), das an der Batteriepackung (9) vorgesehen ist, zu ermöglichen.

13. Mobiler Körper (1) nach Anspruch 12, wobei das batterieseitige Verbindungselement (19) ausgestaltet ist, mit dem Verbindungselement (29) an der Seite des mobilen Körpers verbunden zu werden, wenn der Gehäusebereich (13) von der geöffneten Position in die Rückhalteposition rotiert wird, und die Rückhalteposition einer Verwendungsposition der Batteriepackung (9) entspricht, in der die Batteriepackung (9) in einer aufrechten Position gehalten wird, während die geöffnete Position einer Anbringung - /Entfernungsposition der Batteriepackung (9) entspricht, in der die Batteriepackung (9) zu der einen Seite geneigt ist.

14. Mobiler Körper (1) nach Anspruch 13, wobei der mobile Körper (1) weiterhin eine Vielzahl von Dämpfungselementen (25) aufweist, die eine Rotationsenergie des Gehäusebereichs (13) dämpfen.

15. Mobiler Körper (1) nach einem der Ansprüche 12 bis 14, wobei das Fahrzeug des mobilen Körpers (1) ein Elektrofahrzeug (1) ist, das mittels Strom fährt, der von der Batteriepackung (9) zugeleitet wird.

## Revendications

1. Objet mobile (1) doté d'une partie de logement (13) configurée pour stocker un article (9) de manière amovible,
dans lequel la partie de logement (13) est plus proche d'un côté de l'objet mobile (1) par rapport à un point central de l'objet mobile (1) dans une direction avant et arrière de façon à pouvoir tourner autour d'un axe de rotation (X) s'étendant dans une direction gauche et droite par rapport à l'objet mobile (1) tout en stockant l'article (9) entre une position de maintien pour maintenir l'article stocké (9) et une position ouverte exposant une ouverture vers le côté de l'objet mobile (1), la partie de logement (13) étant configurée de sorte qu'une partie supérieure de la partie de logement (13) se déplace vers le côté lorsque la partie de logement (13) tourne depuis la position de maintien vers la position ouverte,
dans lequel l'objet mobile (1) est un véhicule (1) ayant une pluralité de roues (4, 5), comportant une roue droite et une roue gauche disposées dans une relation d'alignement dans la direction avant et arrière, dans lequel la partie de logement (13) est positionnée entre la roue gauche et la roue droite dans la direction gauche et droite de sorte qu'au moins une portion de la partie de logement (13) chevauche la roue gauche et la roue droite telles qu'observées dans la direction gauche et droite lorsque la partie de logement (13) est dans la position de maintien, et
dans lequel la partie de logement (13) est située vers l'intérieur d'extrémités externes de la roue gauche et de la roue droite dans la direction avant et arrière lorsqu'elle est dans la position de maintien,
**caractérisé en ce que** l'axe de rotation (X) est agencé sur le côté de la partie de logement (13), et chevauche la roue gauche et la roue droite telles qu'observées dans la direction gauche et droite.

2. Objet mobile (1) selon la revendication 1, dans lequel l'objet mobile (1) comporte en outre une partie siège (35) pour accueillir un occupant, et lorsque la partie de logement (13) est dans la position de maintien, au moins une portion de la partie de logement (13) est plus basse qu'une portion la plus basse de la partie siège (35).

3. Objet mobile (1) selon la revendication 2, dans lequel au moins une portion de la partie de logement (13) chevauche la partie siège (35) dans la direction avant et arrière lorsque la partie de logement (13) est dans la position de maintien.

4. Objet mobile (1) selon la revendication 3, dans lequel une partie d'extrémité supérieure de la partie de logement (13) dans la position de maintien est plus haute qu'une portion la plus basse de la partie siège (35).

5. Objet mobile (1) selon l'une quelconque des revendications 1 à 4, dans lequel l'objet mobile (1) est en outre doté d'une partie extérieure (11) solidaire de la partie de logement (13), et formant un extérieur (20) de l'objet mobile (1) sur un côté lorsque la partie de logement (13) est dans la position de maintien.

6. Objet mobile (1) selon la revendication 5, dans lequel la partie extérieure (11) est disposée à l'extérieur de la partie de logement (13) dans la position de maintien avec un espace défini entre celles-ci.

7. Objet mobile (1) selon l'une quelconque des revendications 1 à 6, dans lequel la partie de logement (13) est dotée d'une paroi inférieure (14) pour supporter une surface inférieure de l'article (9) et d'une paroi proximale (15) pour supporter une surface avant de l'article (9), et dans lequel dans la position de maintien, la paroi proximale (15) est située davantage vers l'intérieur que l'extérieur (20) de l'objet mobile (1), et dans la position ouverte, une extrémité supérieure de la paroi proximale (15) est située davantage vers l'extérieur d'une région sensiblement immédiatement au-dessus de l'extérieur (20).

8. Objet mobile (1) selon la revendication 7, dans lequel, dans la position ouverte, l'extrémité supérieure de la paroi proximale (15) est située davantage vers l'extérieur que la partie de l'extérieur (20) de l'objet mobile (1) sensiblement immédiatement au-dessus de l'extrémité supérieure de la paroi proximale (15) d'une distance égale ou supérieure à une dimension avant et arrière (D1) de la surface inférieure de l'article (9).

9. Objet mobile (1) selon la revendication 7 ou 8, dans lequel la partie de logement (13) comporte en outre une paire de parois latérales (17) et une paroi distale (16) plus basse que la paroi proximale (15).

10. Objet mobile (1) selon la revendication 9, dans lequel lorsque la partie de logement (13) est dans la position ouverte, l'extrémité supérieure de la paroi proximale (15) est située davantage vers l'extérieur qu'une extrémité supérieure de la paroi distale (16) d'une distance (L1) égale ou supérieure à une dimension de profondeur (D1) de la surface inférieure de l'article (9) dans la direction avant et arrière.

11. Objet mobile (1) selon la revendication 10, dans lequel la partie de logement (13) comporte une pluralité de sections ayant des surfaces inférieures à une même hauteur dans la position de maintien et recevant chacune un article (9).

12. Objet mobile (1) selon l'une quelconque des revendications 1 à 11, dans lequel l'article (9) se compose d'un bloc-batterie (9), et la partie de logement (13) est dotée d'une ouverture (14a) pour permettre la connexion entre un connecteur côté objet mobile (29) disposé sur l'objet mobile (1) et un connecteur côté batterie (19) disposé sur le bloc-batterie (9).

13. Objet mobile (1) selon la revendication 12, dans lequel le connecteur côté batterie (19) est configuré pour être connecté au connecteur côté objet mobile (29) lorsque la partie de logement (13) tourne depuis la position ouverte vers la position de maintien, et la position de maintien correspond à une position d'utilisation du bloc-batterie (9) dans laquelle le bloc-batterie (9) est maintenu dans une position verticale tandis que la position ouverte correspond à une position de montage / démontage du bloc-batterie (9) dans laquelle le bloc-batterie (9) est incliné vers le côté.

14. Objet mobile (1) selon la revendication 13, dans lequel l'objet mobile (1) comporte en outre une pluralité d'éléments amortisseurs (25) qui amortissent une énergie de rotation de la partie de logement (13).

15. Objet mobile (1) selon l'une quelconque des revendications 12 à 14, dans lequel le véhicule de l'objet mobile (1) est un véhicule électrique (1) qui se déplace au moyen de l'énergie électrique fournie par le bloc-batterie (9).
